# EUROPEAN PATENT APPLICATION

(11) **EP 1 079 167 A1**
(43) Date of publication of application: **28.02.2001**
(21) Application number: 00202937.9
(22) Date of filing: 23.08.2000
(51) Int. Cl.: F16L 47/02, B29C 65/34, B29D 23/00

(54) **Electrofusion fitting**

(30) Priority: 27.08.1999 GB 9920282
(71) Applicant: Uponor Innovation AB, 513 81 Fristad (SE)
(72) Inventor: Jäppinen, Tero, 16300 Orimattila (FI)
(74) Representative: Potter, Vanessa J.

(57) **Abstract**

Electrofusion fitting (1) comprising a plastic body (2), a heating element (3) and a spring element (3) embedded in a surface of the plastic body. The spring element (3) is under a tension or compression which is resisted by the material of the plastic body. Melting of the material of the plastic body (2) by the heating element (3) releases said tension or compression so that mixing of plastic materials and mechanical gripping takes place at the interface between the electrofusion fitting and a plastic component to which it is to be joined.

## Description

This invention relates to the field of electrofusion fittings for use in the welding of polyolefin pipes, for example the polypropylene or polyethylene pipes used for carrying gas or water.

### BACKGROUND TO THE INVENTION

Electrofusion fittings are used to effect the joining of polyolefin pipes. The electrofusion fitting generally consists of a plastic body with which is associated a metal coil or cage ("the heating element") which can be heated either resistively or inductively respectively. Polyolefin pipes are joined by enclosing the ends of the pipes to be joined with the electrofusion fitting and heating the coil or cage of the element so as to melt and fuse the body of the fitting with the ends of the pipes to be joined.

Since the electrofusion fitting is not necessarily made of the same material as the pipes to be joined (or indeed the pipes themselves may each be of a different material) it is advantageous to cause mixing of the materials at the fusion joint to maximise the strength of the finished joint. It can be problematical to ensure this mixing takes place.

Usually, the surfaces of the pipes to be joined have to be prepared before fusion can take place, particularly in the case of old pipes whose outer surfaces may be oxidised and therefore not liable to form a good joint. The preparation usually entails manual scraping of the outer surfaces of the pipes to be joined which, if not carried out properly, may result in subsequent failure of the fusion joint.

It is therefore an object of the present invention to provide an electrofusion fitting which alleviates the above-described problems.

### SUMMARY OF THE INVENTION

According to a first aspect of the present invention there is provided an electrofusion fitting comprising
a plastic body;
a heating element of the plastic body; and
a spring element embedded in a surface of the plastic body and being under a tension or compression which is resisted by the material of the plastic body and such that melting of the material of the plastic body by the heating element releases said tension or compression, characterised in that the spring element is the heating element.

Preferably the heating element is a coil or spring which can be heated resistively. Alternatively the heating element is a cage or net which can be heated inductively and in which, preferably, said heating element can be put under tension or compression by relative longitudinal movement of the longitudinal elements of the cage or net.

Preferably the heating element is made of wire.

The material of the plastic body preferably comprises a foamable thermoplastic polymer. The foamable thermoplastic polymer can be self expandable, that is to say it can comprise a mixture of polymeric components which, at the fusion temperature, react to produce a gaseous component, or, preferably, the foamable thermoplastic polymer can comprise an expansion or foaming agent. Such foaming agents can be liquid for example, pentane, or solid and are well known in the literature. The solid foaming agents generally decompose on heating to form gaseous products. A typical example of a suitable solid foaming agents is azodicarbonamide. The foaming agents can be dispersed as droplets or fine particles within the polymer.

The foamable thermoplastic polymer can comprise, for example, a polyolefin, for example polyethylene, polypropylene, polybutylene and higher olefinic polyers; co-polymers of ethylene, propylene and butylene with each other and with other olefinically unsaturated molomers; olefinically unsaturated aromatic polymers such as polystyrene and styrene co-polymers; and polymers and co-polymers of vinylene monomers such as ethylene, vinyl acetate co-polymers, polycarbonates, and like materials. Polyethylene is the preferred thermoplastic polymer for use in the present invention.

If desired, the fusible thermoplastic polymeric material can comprise a modified polyolefin material, for example, an anhydride modified polyethylene, or the material can comprise a cross-linking agent which reacts during or after the fusion bonding step to cross-link the polymeric material and possibly the adjacent surfaces of the plastics substrates. Modified polyolefins are particularly useful in joining polyolefin surfaces of dissimilar composition. Suitable modified polyolefin materials include, for example, alpha olefin polymers and co-polymers comprising up to 10% by weight of an olefinically unsaturated carboxylic acid or an anhydride thereof, such as, for example, acrylic acid, maleic acid, itaconic acid, and succinic acid, or their anhydrides, as co-polymer or graft co-polymer components.

Alternatively, the fusible thermoplastic polymeric material may comprise a blend of any of the above polymers, in any combination, optionally with a compatibiliser, such as a modified polyolefin, such blends being particularly useful in connecting plastics substrates of differing composition. In practice, such blends are particularly successful where the individual polymeric components have comparable fusion temperatures.

If desired, the fusible thermoplastic polymeric material can comprise one or more fillers, and, for example, it can comprise fillers which react chemically, such as resin/accelerator or resin/catalyst combinations, and/or which can reach high temperatures when exposed to infra-red radiation or electromagnetic radiation, for example, stainless steel fibres, as described in PCT/EP96/02801.

The foamable thermoplastic polymer may also comprise other additives such as, for example, antioxidants and stabilisers.

In preferred embodiments of the invention the foamable thermoplastic polymer can expand freely by from 1 to 3 times its own volume when heated to its fusion temperature, although its expansion will of course usually be limited by the pressure generated within the fusion region. This pressure also aids the fusion welding process.

In a second aspect of the invention, there is provided a method of manufacturing an electrofusion fitting substantially as described above comprising the steps of:
tensioning said heating element by mounting same on a core having an appropriate diameter;
positioning said core and heating element in a mould;
injecting plastic material into said mould;
allowing the electrofusion fitting so formed to cool so that the heating element is bonded to the plastic material; and
removing said mould and said core.

In a third aspect of the invention there is provided a method of joining an electrofusion fitting substantially as described above to a plastic component comprising the steps of:
bringing said surface of the plastic body into contact with a surface of the plastic component; and
heating said heating element so as to cause melting of the plastic at the interface between the electrofusion fitting and the plastic component, whereby restoration of the spring element mixes the melted plastic at said interface.

In a fourth aspect of the invention there is provided a method of joining an electrofusion fitting substantially as described above to a plastic component comprising the steps of:
bringing said surface of the plastic body into contact with a surface of the plastic component; and
heating said heating element so as to cause melting of the plastic at the interface between the electrofusion fitting and the plastic component, whereby restoration of the spring element grips the plastic component at said interface.

In a preferred form, restoration of the spring element both mixes the melted plastic and grips the plastic component at said interface.

### BRIEF DESCRIPTION OF THE DRAWINGS

Preferred embodiments of the invention will now be more particularly described, by way of example only, with reference to the accompanying drawings in which:
Figures 1A-1C show a coil-type heating element of various diameters;
Figures 2A-2C show a cage-type heating element of various diameters;
Figure 3 shows a cross-sectional side view of an electrofusion fitting embodying the invention being formed on a core;
Figure 4 shows a cross-sectional side view of an electrofusion fitting embodying the invention surrounding the ends of two pipes to be joined; and
Figure 5 shows a cross-sectional side view of an alternative embodiment of the electrofusion fitting.

### DESCRIPTION OF THE PREFERRED EMBODIMENTS

An electrofusion element 1 embodying the present invention has, as its basic components, a plastic body 2 and a heating element 3.

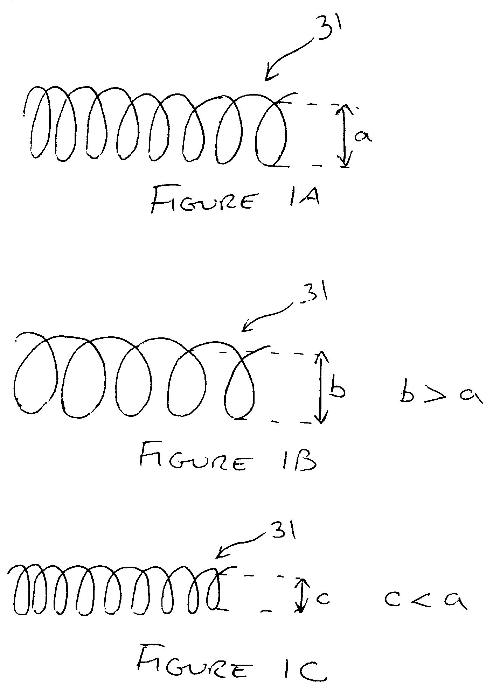

The heating element 3 can be in the form of a helical spring or coil 31 as shown in Figures 1A-1C. Such a coil is intended to be heated resistively as will be described in more detail below. The coil 31 is formed by winding on a core (not shown) which results in a coil having a "normal" diameter a as shown in Figure 1A. It is possible to put the coil 31 under tension (Figure 1B) so that its diameter increases to b or to put the coil 31 under compression (Figure 1C) so that its diameter decreases to c.

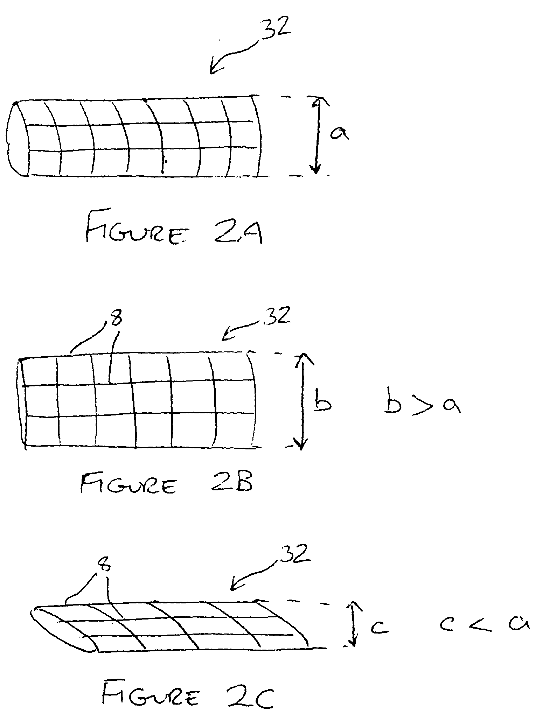

In an alternative embodiment, the heating element 3 could be a cage or net 32 as shown in Figures 2A-2C. Such a heating element is intended to be heated by induction as described below. As shown, the "normal" diameter a of the cage (Figure 2A) can be increased by putting the cage 32 under tension (Figure 2B) or decreased by putting the cage under compression (Figure 2C). The change in diameter occurs by the longitudinal cage elements 8 moving longitudinally with respect to one another.

It will be appreciated, however, that the cage 32 of Figure 2C, although having diameter c in a first plane, will retain diameter a in the perpendicular plane to the first plane. It may be desirable to provide a cage 32 of a different construction which permits a total reduction in diameter from diameter a to diameter c. For example, the "ring" elements of the cage could be corrugated or overlapped so that the overall diameter is compressible.

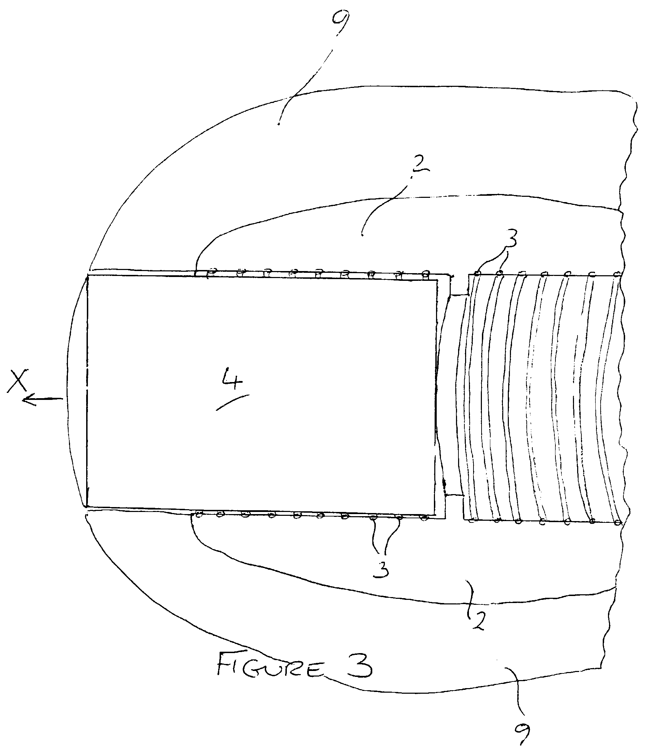

Referring now to Figure 3, the electrofusion fitting is formed as follows. The heating element 3 is forced onto a core 4 of greater diameter than the heating element's normal diameter, so that the heating element 3 is under tension. The core 4 and heating element 3 are then placed in a mould 9 and plastic material is injected into the mould. The tensioned heating element 3 bonds to the plastic material so that, on cooling, and when the core 4 is removed in direction X indicated in Figure 3 and the mould 9 is removed, an electrofusion element is formed having a plastic body 2 and a heating element 3 bonded thereto.

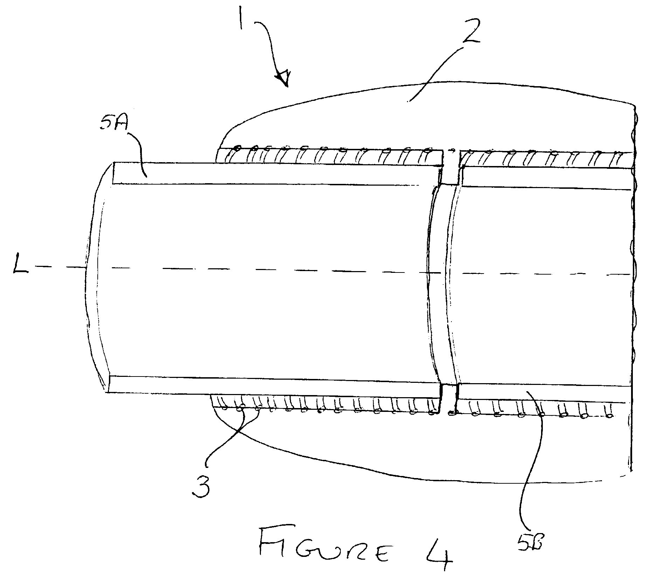

The electrofusion fitting 1 of the present invention can be used to join one or more plastic components, for example polyolefin pipes, as shown in Figure 4. The electrofusion fitting 1 surrounds the ends of the two pipes 5A, 5B which are to be joined. The heating element 3 is then heated which causes melting of the plastic at the interface between the electrofusion fitting 3 and the pipes 5A, 5B. Once the plastic of the body 2 has melted, the tension to which the heating element 3 had been subjected is released and the heating element 3 is restored to its normal diameter by shrinking towards the longitudinal axis L indicated in Figure 4.

As the diameter of the heating element 3 decreases, the melted plastic of the body 2 and the pipes 5A, 5B are mixed by the moving heating element 3 which improves the homogeneity of the joint and reduces the risk of subsequent failure of the joint.

Furthermore, as the diameter of the heating element 3 decreases, it provides a mechanical gripping function on the outer surfaces of the pipes 5A, 5B which also improves the effectiveness of the joint.

The fusion welding of joints using the electrofusion fitting of the present invention is faster and more effective than using prior art fittings. Since the heating element decreases in diameter during the fusion process, the gap between the fitting and the pipes to be joined is minimised and therefore the heating time can be less.

A further advantage of the fitting of the present invention is that, as the heating element decreases in diameter, it scrapes the outer surfaces of the pipes 5A, 5B. This can eliminate the need for conventional manual scraping of the pipes' surfaces before fusion can take place (or at least diminishes the likelihood of the joint subsequently failing as a result of insufficient prior scraping).

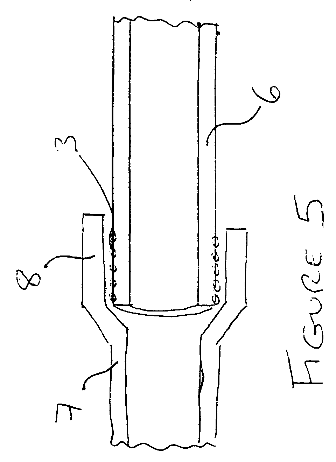

Shown in Figure 5 is an alternative embodiment of the electrofusion fitting, in which the heating element 3 is embedded in one end of a polyolefin pipe 6 which it is intended to join to another pipe 7. In this embodiment, the heating element 3 is formed with a "normal" diameter as referred to above with respect to Figures 1A-2C.

However, unlike the embodiment of Figure 3, the electrofusion fitting is formed by compressing the heating element 3, thereby reducing its diameter, and bonding the heating element 3 to the outer surface of one end of the pipe 6.

The pipe 7 to which pipe 6 is to be joined has a flared portion 8 of sufficient diameter to substantially surround the heating element 3 as shown in Figure 5. On heating the heating element 3, the plastic at the interface between pipe 6 and pipe 7 melts, thus releasing the compressive force on the heating element 3. The heating element 3 therefore expands, restoring its "normal" diameter as the fusion takes place.

As with the embodiment shown in Figures 3 and 4, the embodiment of Figure 5 also has the advantage over the prior art that, during the fusion process, mixing of the plastic materials and mechanical gripping at the joint occurs as a result of the moving heating element.

The electrofusion fitting of the present invention has been described in relation to embodiments which use a coil-type heating element which is resistively heated. Electrofusion elements employing a cage or net-type heating element (see Figures 2A-2C), intended to be heated by induction are also within the scope of this invention.

The above-described embodiments assume that the heating element and the "spring element" are one and the same, however it will be appreciated that a spring element which is separate from the heating element could be employed.

## Claims

1. Electrofusion fitting comprising
a plastic body (2);
a heating element (3) of the plastic body; and
a spring element (31;32) embedded in a surface of the plastic body and being under a tension or compression which is resisted by the material of the plastic body (2) and such that melting of the material of the plastic body (2) by the heating element (3) releases said tension or compression, characterised in that the spring element is the heating element.

2. Electrofusion fitting as claimed in claim 1 wherein the heating element (3) is a coil or spring (31) which can be heated resistively; or
wherein the heating element is a cage or net (32) which can be heated inductively and, preferably,
wherein said heating element can be put under tension or compression by relative longitudinal movement of the longitudinal elements of the cage or net.

3. Electrofusion fitting as claimed in any of the preceding claims wherein the heating element is made of wire.

4. Electrofusion fitting as claimed in any of the preceding claims wherein the material of the plastic body is a foamable thermoplastic polymer.

5. Electrofusion fitting as claimed in claim 4 in which the foamable thermoplastic polymer comprises an expansion or foaming agent.

6. Electrofusion fitting according to claim 5 in which the expansion or foaming agent is an azodicarbonamide.

7. Electrofusion fitting according to claim 4 or claim 5, in which the foamable thermoplastic polymer comprises a polyolefin.

8. Method of manufacturing an electrofusion fitting as claimed in any of the preceding claims comprising the steps of:
tensioning said heating element (3) by mounting same on a core (4) having an appropriate diameter;
positioning said core (4) and heating element (3) in a mould (9);
injecting plastic material into said mould;
allowing the electrofusion fitting so formed to cool so that the heating element (3) is bonded to the plastic material; and
removing said mould (9) and said core (4).

9. Method of joining an electrofusion fitting as claimed in any of claims 1-7 to a plastic component comprising the steps of:
bringing said surface of the plastic body (2) into contact with a surface of the plastic component (5A;5B); and
heating said heating element (3) so as to cause melting of the plastic at the interface between the electrofusion fitting and the plastic component, whereby restoration of the spring element mixes the melted plastic at said interface.

10. Method of joining an electrofusion fitting as claimed in any of claims 1-7 to a plastic component comprising the steps of:
bringing said surface of the plastic body (2) into contact with a surface of the plastic component; and
heating said heating element (3) so as to cause melting of the plastic at the interface between the electrofusion fitting and the plastic component, whereby restoration of the spring element grips the plastic component at said interface.
